# EUROPÄISCHE PATENTANMELDUNG

(11) **EP 1 420 543 A1**
(43) Veröffentlichungstag der Anmeldung: **19.05.2004**
(21) Anmeldenummer: 02025494.2
(22) Anmeldetag: 15.11.2002
(51) Int. Cl.: H04L 12/26

(54) **Verfahren zur Anpassung einer Benutzeroberfläche auf einer Anzeigevorrichtung eines Protokolltesters und Protokolltester dafür**

(71) Anmelder: Tektronix International Sales GmbH, 8201 Schaffhausen (CH)
(72) Erfinder: Schönfeld, Christian, 12207 Berlin (DE)
(74) Vertreter: Schurack, Eduard F.

(57) **Zusammenfassung**

Die vorliegende Erfindung betrifft ein Verfahren zur Anpassung einer Benutzeroberfläche auf einer Anzeigevorrichtung eines Protokolltesters, wobei auf der Anzeigevorrichtung ein visueller Netzplan dargestellt wird, der zur Konfiguration einer telekommunikationstechnischen Messaufgabe durch einen Benutzer verwendet wird, wobei der auf der Anzeigevorrichtung dargestellte visuelle Netzplan im Vergleich zu einem Basisnetzplan modifiziert ist im Hinblick auf die im Protokolltester vorhandene Hard- und/oder Software. Sie betrifft überdies einen Protokolltester zur Durchführung dieses Verfahrens.

## Beschreibung

Die vorliegende Erfindung betrifft ein Verfahren zur Anpassung einer Benutzeroberfläche auf einer Anzeigevorrichtung eines Protokolltesters sowie einen Protokolltester zur Durchführung dieses Verfahrens. Aus der EP 1 128 600 A1 ist ein Verfahren zum Erstellen eines Kommunikationsablaufs zwischen mindestens zwei Instanzen bekannt. Dazu werden am Protokolltester zunächst die an der Kommunikation beteiligten Instanzen ausgewählt, anschließend die Protokollschicht, auf deren Grundlage die Kommunikation zwischen den ausgewählten Instanzen ablaufen soll. Weiterhin werden diejenigen abstrakten Kommunikationsschnittstellen der Protokollschicht ausgewählt, die an der Kommunikation beteiligt sind, sowie die Kommunikationsdaten bestimmt. Auf der Basis dieser Auswahlen erstellt der Protokolltester automatisch einen zwischen den mindestens zwei Instanzen ausführbaren Kommunikationsablauf, d.h. ein ablauffähiges Script, wobei die Auswahl der abstrakten Kommunikationsschnittstellen bzw. die Auswahl der Kommunikationsdaten grafisch erfolgt und den dabei auswählbaren Parametern Beschreibungsdateien zugeordnet sind, die im Erstellungsschritt zur Erstellung eines Kommunikationsablaufs zwischen den Instanzen verwendet werden. Grafische Benutzeroberflächen, wie sie in der genannten Anmeldung zur Konfiguration komplexer Informationen im Rahmen telekommunikationstechnischer Messaufgaben verwendet werden, müssen im Wesentlichen den folgenden Anforderungen genügen: Zum einen sollen sie leicht verständlich, einfach zu bedienen und übersichtlich sein. Zum anderen sollen alle Konfigurationsparameter und deren Abhängigkeiten dargestellt werden. Zwischen diesen beiden Anforderungen besteht ein Widerspruch, dessen Lösung die Qualität der Benutzeroberfläche bestimmt. Denn die Anzahl der Konfigurationsparameter, deren mögliche Werte und die verschiedensten komplexen Beziehungen dazwischen ändern sich, wenn Systemparameter, das heißt die Einsatzumgebung oder der Kontext unterschiedlich eingestellt werden. Der Kontext in telekommunikationstechnischen Messaufgaben wird beispielsweise bestimmt durch die verwendeten Schnittstellen, die verwendete Hardware (zum Beispiel Primo oder ATM) oder die verwendeten Protokollstacks (zum Beispiel WhiteBook-ISUP Stack oder IP Stack). Der Stand der Technik, bei dem die Obermenge aller möglichen Konfigurationsparameter angezeigt wurde, stellte keine befriedigende Lösung dar.

Die Aufgabe der vorliegenden Erfindung besteht deshalb darin, die Konfiguration mit telekommunikationstechnischen Messaufgaben unter Verwendung grafischer Benutzeroberflächen zu vereinfachen.

Diese Aufgabe wird gelöst durch ein Verfahren mit den Merkmalen von Patentanspruch 1 sowie durch einen Protokolltester zur Durchführung dieses Verfahrens gemäß Patentanspruch 17.

Diese Erfindung lässt sich besonders bevorzugt einsetzen im Zusammenspiel mit der parallelen Patentanmeldung, die den gleichen Anmeldetag hat, wie die vorliegende Patentanmeldung mit dem Titel "Verfahren zur Konfiguration einer Messaufgabe auf einem Protokolltester" (siehe Anwaltszeichen 27073). Der Inhalt dieser Anmeldung sowie der oben erwähnten EP 1 128 600 A1 wird durch diese Bezugnahme in die vorliegende Patentanmeldung aufgenommen.

Der vorliegenden Erfindung liegt die Idee zugrunde, dass eine grafische Benutzeroberfläche übersichtlicher gestaltet werden kann, wenn diese an die jeweils aktuellen Systemparameter, insbesondere Hardware, Software etc. angepasst und auf diese Weise übersichtlicher und damit viel robuster gemacht wird. Dadurch, dass dem Benutzer ein modifizierter visueller Netzplan zur Konfiguration seiner Messaufgabe zur Verfügung gestellt wird, wobei die Modifikation im Hinblick auf die im Protokolltester vorhandene Hard- und/oder Software vorgenommen wurde, wird die Benutzeroberfläche übersichtlicher gestaltet, insbesondere auf die Elemente bzw. Parameter beschränkt, die mit der vorgegebenen Ausstattung des Protokolltesters zur Konfiguration einer Messaufgabe herangezogen werden können. Die erfindungsgemäße Lösung zur kontextabhängigen Oberflächenanpassung löst damit den Widerspruch zwischen dem Wunsch nach einer einfachen und übersichtlichen Benutzeroberfläche und der Notwendigkeit, mehrere Konfigurationsparameter eingeben zu können. Durch Einschränkung auf die tatsächlich zur Wahl stehenden Parameterwerte werden Fehlbedienungen des Anwenders vermieden.

Eine besonders vorteilhafte Ausführungsform zeichnet sich dadurch aus, dass der auf der Anzeigevorrichtung angezeigte visuelle Netzplan weiterhin modifiziert wird unter Berücksichtigung der von einem Benutzer über die Benutzeroberfläche durchgeführten Auswahl der Messaufgabe und/oder Konfiguration der Messaufgabe. Die vom Benutzer durchgeführte Eingabe führt zur Programmlaufzeit zu einer Modifikation der Benutzeroberfläche modifiziert - sofern eine neue Darstellung erforderlich ist.

Bevorzugt wird der visuelle Netzplan von dem Protokolltester aus einer Textdatei zur Beschreibung einer grafischen Benutzeroberfläche erzeugt. Durch die Wahl einer Textdatei kann eine einfache Sprache definiert werden, die mit wenigen Textzeilen die Beschreibung einer komplexen grafischen Oberfläche ermöglicht. Der Algorithmus für die Sprache der Textdateien ist hierzu in einer Speichervorrichtung abgelegt. Ein Programm fragt die Eingaben des Benutzers ab, die er bis zu dem jeweiligen Zeitpunkt gemacht hat und erzeugt daraus, wie für einen Fachmann leicht nachvollziehbar, die passende Textdatei. Andererseits ist es jedem Benutzer auch möglich, Textdateien zur Beschreibung von Benutzeroberflächen zu entwerfen. Insbesondere für Experten ist es ein Leichtes, ihr Wissen in einfacher Form anderen Anwendern nutzbar zu machen. Die Sprache kann verschiedene Arten von Objekten mit unterschiedlichsten Eigenschaften zur Verfügung stellen. Zusätzlich können verschiedene Objekte miteinander in Beziehung gesetzt werden. Neben den Informationen für die reine Darstellung ist bevorzugt, Expertenwissen für einzelne Konfigurationsparameter zu hinterlegen. Damit werden Standardwerte gesetzt und auch weniger geübte Benutzer können, sofern sie die entsprechenden Parameter nicht modifizieren wollen, sie zur Konfiguration einer Messaufgabe heranziehen.

Bevorzugt enthält die Textdatei Angaben über die Position von Netzwerkelementen und Angaben über die Lage von Schnittstellen zwischen den Netzwerkelementen. Im Hinblick auf die Einfachheit der Darstellung ist die Textdatei korreliert mit der Hard- und/oder Softwareausstattung des Protokolltesters. Die geeignete Textdatei kann auf zwei unterschiedlichen Wegen gefunden werden: Sie kann aus einer vorgebbaren Menge von Textdateien ausgewählt werden oder sie wird vom Protokolltester erzeugt im Hinblick auf die Hard- und/oder Softwareausstattung des Protokolltesters. Selbstverständlich können, sofern die Darstellung in einer Benutzeroberfläche ungeeignet ist, mehrere Textdateien ausgewählt bzw. erzeugt werden und dem Benutzer zur Auswahl angeboten werden.

Bei der Auswahl der Textdatei bzw. bei der Erzeugung der Textdatei können die Eingaben des Benutzers zur Spezifizierung der Messaufgabe berücksichtigt werden. Insbesondere kann nach einer vom Benutzer vorgenommenen Änderung der Spezifizierung der Messaufgabe, sofern nötig, eine andere Textdatei ausgewählt bzw. erzeugt werden. Die Textdatei kann lediglich die Position und Verbindungen der Elemente des visuellen Netzwerkplans definieren, während ein Interpreter die Hard- und/oder Softwareausstattung des Protokolltesters derart berücksichtigt, dass er die Elemente entsprechend kennzeichnet, für die eine Auswahl besteht und/oder die für die Konfiguration der Messaufgabe verwendet werden können. Diese wird bevorzugt nach Einschalten des Protokolltesters durch Abfrage entsprechender Daten aus einer Speichervorrichtung ermittelt, wobei vom Hersteller in die Speichervorrichtung die Daten entsprechend der Hard- und Softwareausstattung des Protokolltesters eingeschrieben werden und beispielsweise beim Erwerb eines upgrades modifiziert werden. Der Interpreter wertet das Expertenwissen aus und setzt es mit dem aktuellen Bedingungen der Programmumgebung in Beziehung und modifiziert "on the fly" die daraus generierte Oberfläche. Für den Anwender entsteht so der Eindruck, dass sich die Oberflächen dynamisch an die aktuellen Systemparameter anpassen. Da die geeignete Textdatei zur Programmlaufzeit immer wieder dann interpretiert wird, wenn eine neue Eingabe erfolgt ist, werden Änderungen an der Konfiguration der Messaufgabe unmittelbar in der Oberfläche sichtbar, ohne dass Komponenten des Softwaresystems neu generiert werden müssten.

Die Modifikation des Basisnetzplans kann darin bestehen, dass nur ein Teil des visuellen Basisnetzplans auf der Anzeigevorrichtung angezeigt wird. Die Modifikation kann auch darin bestehen, dass die Elemente in einer vorgebbaren Weise gekennzeichnet sind, die im Hinblick auf die vorhandene Hard- und/oder Software konfiguriert werden können. Bevorzugt besteht die Kennzeichnung darin, dass für diese Elemente grafische Auswahlmöglichkeiten angeboten werden, aus denen der Benutzer auswählen kann. Bevorzugt besteht die Kennzeichnung weiterhin darin, dass Elemente, die konfiguriert werden können und/oder Elemente, für die eine Konfigurationsmöglichkeit erwerbbar ist, und/oder Elemente, für die keine Konfigurationsmöglichkeit erhältlich ist, visuell unterschiedlich dargestellt werden, insbesondere unter Verwendung unterschiedlicher Farben. Dadurch wird sichergestellt, dass ein Benutzer zur Konfiguration seiner Messaufgabe keine Parameter definiert, die er mit der vorhandenen Hard- und/oder Softwareausstattung seines Protokolltesters gar nicht umsetzen kann. Vielmehr erhält er eine übersichtliche Information, welche Parameter er definieren kann, welche nicht, und welche, falls er es für nötig erachtet, sich noch durch Erwerb eines Upgrades definieren lassen.

Bevorzugt lässt daher der Protokolltester die Konfiguration nur der Elemente durch einen Benutzer zu, für die die entsprechende Hard- und/oder Softwareausstattung in dem Protokolltester vorhanden ist. Die Konfiguration von Messaufgaben, die mit dem vorhandenen Protokolltester gar nicht möglich ist, wird somit zuverlässig vermieden.

Die entsprechenden Vorteile des erfindungsgemäßen Verfahrens ergeben sich auch für einen erfindungsgemäßen Protokolltester, der zur Durchführung des erfindungsgemäßen Verfahrens ausgelegt ist.

Weitere vorteilhafte Ausführungsformen der Erfindung ergeben sich aus den Unteransprüchen.

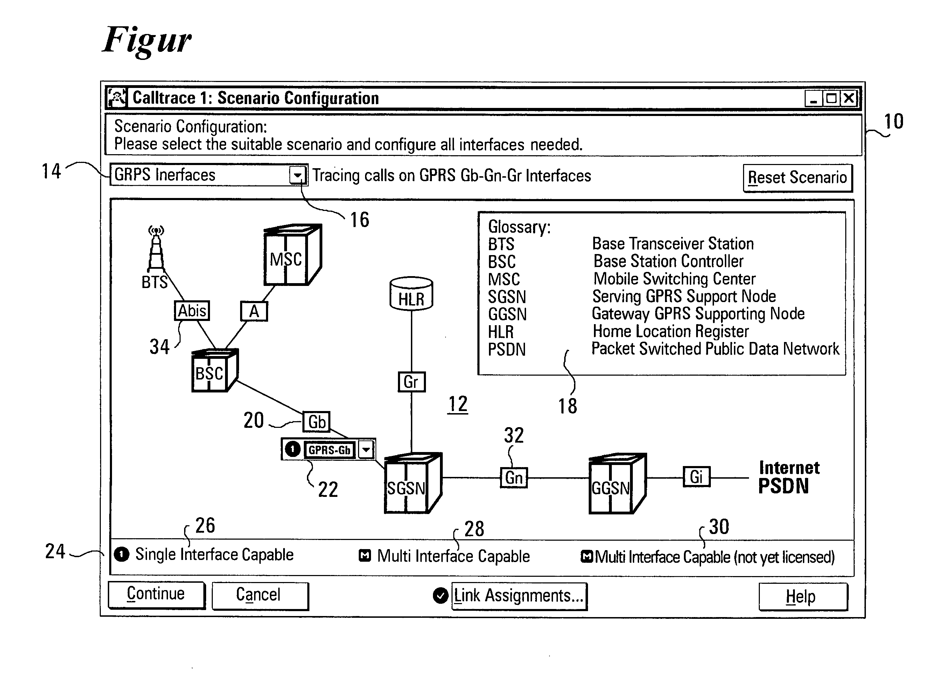

Nachfolgend wird nun ein Ausführungsbeispiel der vorliegenden Erfindung unter Bezugnahme auf die beigefügte Zeichnung näher beschrieben. Die Figur zeigt einen visuellen Netzplan am Beispiel eines GPRS-Netzwerks, der im Hinblick auf die Hard- und Softwareausstattung des Protokolltesters modifiziert ist.

Im Anhang ist die Textdatei zu der in der Figur dargestellten Benutzeroberfläche angegeben.

Die Figur zeigt eine grafische Benutzeroberfläche 10 eines Protokolltesters, mit der eine telekommunikationstechnische Messaufgabe durch einen Benutzer konfiguriert werden kann. Neben der dargestellten Messaufgabe "Calltrace" (Rufverfolgung) können selbstverständlich auch andere Messaufgaben konfiguriert werden, beispielsweise Simulation, Test, das heißt Emulation, sowie Monitoring. Der dargestellte visuelle Netzplan 12 ist gegenüber einem Basisnetzplan, der die Definition aller Messaufgaben im Zusammenhang mit dem beispielhaft gezeigten GPRS-Netz ermöglichen würde, im Hinblick auf die Hard- und/oder Softwareausstattung des Protokolltesters des Benutzers modifiziert. Eine erste Modifikation besteht darin, daß die Anzahl der dargestellten Netzwerkelemente im Hinblick auf die gewählte Meßaufgabe reduziert ist. In einem Auswahlfenster 14 werden dem Benutzer durch Klicken auf das Icon 16 verschiedene Messaufgaben angeboten, die mit dem vorhandenen Protokolltester im Hinblick auf dessen Ausstattung möglich sind. Vorliegend hat der Benutzer die Messaufgabe "Tracing calls on GPRS Gb-Gn-Gr Interfaces" gewählt. Der visuelle Netzplan 12 zeigt die für diese Messaufgabe relevanten Teile eines GPRS-Netzwerks an. Zur Erhöhung der Verständlichkeit sind in einem Fenster 18 die im visuellen Netzplan 12 gewählten Abkürzungen erklärt. Der Protokolltester hat festgestellt, dass in der aktuellen Programmumgebung nur die Gb-Schnittstelle 20 verfügbar ist, weil für die anderen Schnittstellen, beispielsweise Gr, Gn, noch keine Implementierungen installiert sind. Der Benutzer kann daher über die Combobox 22 die Gb-Schnittstelle konfigurieren, insbesondere angeben, bei welchen Protokollen er seine Messaufgabe ausführen möchte. Eine unnötige Konfiguration der Gr- oder der Gn-Schnittstelle wird zuverlässig vermieden. In der Zeile 24 ist angegeben, dass die Messaufgabe an einer einzelnen Schnittstelle ausgeführt werden kann, siehe die Angabe 26, oder auf mehreren Schnittstellen, siehe die Angabe 28. Wie sich der Angabe 30 entnehmen lässt, ist jedoch die Angabe 28 noch nicht lizenziert, das heißt sie kann zusätzlich erworben werden.

Würde der Benutzer zwischenzeitlich in einem anderen Programmteil die Gn-Schnittstelle aktivieren, würde dies von dem erfindungsgemäßen Protokolltester erkannt werden und vom Interpreter auf der Basis derselben Textdatei eine Combobox auch für die Gn-Schnittstelle 32 angeboten werden.

Typische Systemparameter, die bei der im Protokolltester durchgeführten Suche nach installierten Hard- und Softwarekomponenten ermittelt werden, sind beispielsweise die Ermittlung, welche Netzkarten zur Verfügung stehen, welche Interfaces vorhanden sind und welche Protokollstacks konfiguriert sind.

Im Stand der Technik wären beispielsweise bei einer Messaufgabe "Rufverfolgung" bei GPRS-Interfaces zehn Varianten dem Benutzer angeboten worden, wobei vorliegend im Hinblick auf die Hard- und Softwareausstattung des Protokolltesters nur zwei realisierbar gewesen wären.

Sofern mehrere visuelle Netzpläne im Hinblick auf die Hard- und Softwareausstattung des Protokolltesters und/oder die Konfiguration der Messaufgabe durch den Benutzer möglich sind, wird zunächst derjenige angezeigt, der zuletzt gewählt wurde oder derjenige, bei dem es die meisten oder die wenigsten Konfigurationsmöglichkeiten gibt. Dies kann von einem Benutzer in einem anderen Programmteil festgelegt werden. Ein Protokollstack gilt dann als konfiguriert, wenn er einer entsprechenden Hardware im Protokolltester zugeordnet wurde. Erst nach einer Konfiguration eines derartigen "logischen Links" wird dieser vom Protokolltester erkannt und bei der Kreation oder bei der Erzeugung der Textdatei für die grafische Benutzeroberfläche berücksichtigt.

In dem Anhang ist die zu dem visuellen Netzplan der Figur zugehörige Textdatei angegeben. In Zeile 5 ist der Name angegeben, der in dem Auswahlfenster 14 gezeigt wird, die zugehörige Beschreibung ist in Zeile 6 angegeben. Die Zeilen 8 und 9 definieren die Position auf der Benutzeroberfläche, an der diese Informationen angezeigt werden. Die Zeilen 10 bis 17 betreffen die erste Komponente: Zeile 10 ist eine Überschrift, Zeile 11 gibt den Namen der Komponente an, Zeile 12 den Ort, an dem das grafische Symbol gespeichert ist, die Zeilen 13 bis 16 die Position auf der Benutzeroberfläche und die Zeile 17 die in das Fenster 18 aufzunehmende Zusammenfassung. Entsprechendes gilt für die Komponenten 2 bis 7, die auf Seite 1, Zeile 18 des Anhangs bis Seite 2, Zeile 14 beschrieben sind. Seite 2, Zeilen 15 bis 19 geben die Definition der ersten Schnittstelle an. Seite 2, Zeile 16 gibt den Namen der Schnittstelle an. Die Zeilen 17 und 18 definieren, zwischen welchen Netzwerkelementen sie angeordnet ist und die Zeile 19 gibt an, ob Protokolle hierfür verfügbar sind oder nicht. Vorliegend sind keine Protokoll verfügbar, weshalb zur Abis-Schnittstelle 34 keine Combobox angeboten wird. Entsprechendes gilt für die A-Schnittstelle, die in den Zeilen 20 bis 24 auf Seite 2 des Anhangs definiert ist. Für die Gb-Schnittstelle hingegen, die auf Seite 2, Zeilen 26 bis 29 definiert ist, sind Protokolle verfügbar, wobei die Default-Einstellung das Protokoll GPRS-Gb MM/SM ist.

Die Ursache dafür, dass zwar gemäß der Beschreibungsdatei Protokolle für die Gr- und die Gn-Schnittstelle zur Verfügung stehen, für die entsprechenden Schnittestellen in der Figur jedoch keine Comboboxen angeboten werden, hat ihre Ursache in folgendem: Für die Gr- und Gn-Schnittstelle stehen prinzipiell Protokolle zur Verfügung, nur wurden diese in der aktuellen Systemkonfiguration nicht verwendet. Für den Benutzer ist in dem Anwendungsbeispiel kein Unterschied zwischen "nicht installiert" und "nicht konfiguriert" erkennbar. Eine für diesen Aspekt differenzierte Darstellung erscheint aus Benutzersicht zu verwirrend - was letzendlich zählt ist der Umstand, dass die Gr- und Gn-Schnittstelle in dieser Situation nicht wählbar sind. Das "Warum" ist zweitrangig. Wenn der Benutzer hingegen die Protokolle für die Gr- oder Gn-Schnittstellen verwendet, werden die entsprechenden grafischen Auswahlmöglichkeiten sofort zugänglich (enabled), ohne dass dafür eine neue Textdatei erzeugt werden müßte, da diese bereits zur Berücksichtigung dieses Umstands ausgelegt ist.

### ANHANG:

### [Common]

Name=GPRS Interfaces
Description=Tracing calls on GPRS Gb - Gn - Gr Interfaces
[Glossary]
Show=1
Top=10

### [Component_1]

Name=BTS
Icon=Icons\BTS.bmp
Left=20
Top=10
Width=40
Height=80
Description=Base Transceiver Station

### [Component_2]

Name=BSC
Icon=Icons\BSC.bmp
Left=80
Top=120
Width=40
Height=80
Description=Base Station Controller

### [Component_3]

Name=MSC
Icon=Icons\MSC.bmp
Left=135
Top=20
Width=80
Height=60
Description=Mobile Switching Center

### [Component_4]

Name=SGSN
Icon=Icons\SGSN.bmp
Left=230
Top=230
Width=120
Height=80
Description=Serving GPRS Support Node

### [Component_5]

Name=GGSN
Icon=Icons\GGSN.bmp
Left=440
Top=230
Width=120
Height=80
Description=Gateway GPRS Supporting Node

### [Component_6]

Name=HLR
Icon=Icons\HLR.bmp
Left=250
Top=70
Width=80
Height=30
Description=Home Location Register

### [Component_7]

Name=PSDN
Icon=Icons\PSDN_Internet.bmp
Left=620
Top=230
Width=80
Height=80
Description=Packet Switched Public Data Network

### [Interface_1]

Name=Abis
From=BTS
To=BSC
Protocols=not_available

### [Interface_2]

Name=A
From=BSC
To=MSC
Protocols=not_available

### [Interface_3]

Name=Gb
From=BSC
To=SGSN
Protocols=GPRS-Gb
Default=GPRS-Gb MM/SM

### [Interface_4]

Name=Gr
From=HLR
To=SGSN
Protocols=GPRS-Gr
Default=GPRS-Gr

### [Interface_5]

Name=Gn
From=SGSN
To=GGSN
Protocols=GPRS-Gn
Default=GPRS-Gn GTP SMG

### [Interface_6]

Name=Gi
From=GGSN
To=PSDN
Protocols=not_available

## Patentansprüche

1. Verfahren zur Anpassung einer Benutzeroberfläche auf einer Anzeigevorrichtung eines Protokolltesters, wobei auf der Anzeigevorrichtung ein visueller Netzplan darstellt wird, der zur Konfiguration einer telekommunikationstechnischen Meßaufgabe durch einen Benutzer verwendet wird, wobei der auf der Anzeigevorrichtung dargestellte visuelle Netzplan im Vergleich zu einem Basisnetzplan modifiziert ist im Hinblick auf die im Protokolltester vorhandene Hard- und/oder Software.

2. Verfahren nach Anspruch 1,
**dadurch gekennzeichnet,**
**daß** der auf der Anzeigevorrichtung angezeigte visuelle Netzplan weiterhin modifiziert wird unter Berücksichtigung der von einem Benutzer über die Benutzeroberfläche durchgeführte Auswahl der Meßaufgabe und/oder Konfiguration der Meßaufgabe.

3. Verfahren nach Anspruch 1 oder 2,
**dadurch gekennzeichnet,**
**daß** der visuelle Netzplan von dem Protokolltester aus einer Textdatei zur Beschreibung einer graphischen Benutzeroberfläche erzeugt wird.

4. Verfahren nach Anspruch 3,
**dadurch gekennzeichnet,**
**daß** die Textdatei Angaben über die Position von Netzwerkelementen und Angaben über die Lage von Schnittstellen zwischen den Netzwerkelementen umfaßt.

5. Verfahren nach Anspruch 3 oder 4,
**dadurch gekennzeichnet,**
**daß** die Textdatei korreliert ist mit der Hard- und/oder Software-Ausstattung des Protokolltesters.

6. Verfahren nach Anspruch 5,
**dadurch gekennzeichnet,**
**daß** die Textdatei ausgewählt wird aus einer vorgebbaren Menge von Textdateien.

7. Verfahren nach Anspruch 5,
**dadurch gekennzeichnet,**
**daß** die Textdatei vom Protokolltester erzeugt wird im Hinblick auf die Hard- und/oder Software-Ausstattung des Protokolltesters.

8. Verfahren nach Anspruch 6 oder 7,
**dadurch gekennzeichnet,**
**daß** mehrere Textdateien ausgewählt bzw. erzeugt werden im Hinblick auf die Hard- und/oder Softwareausstattung des Protokolltesters und dem Benutzer zur Auswahl angeboten werden.

9. Verfahren nach Anspruch 6 oder 7,
**dadurch gekennzeichnet,**
**daß** bei der Auswahl der Textdatei bzw. bei der Erzeugung der Textdatei die Eingaben des Benutzers zur Spezifizierung der Meßaufgabe berücksichtigt werden.

10. Verfahren nach Anspruch 9,
**dadurch gekennzeichnet,**
**daß** nach einer von einem Benutzer vorgenommenen Änderung der Spezifizierung der Meßaufgabe, sofern nötig, eine andere Textdatei ausgewählt bzw. erzeugt wird.

11. Verfahren nach einem der vorhergehenden Ansprüche,
**dadurch gekennzeichnet,**
**daß** die Textdatei lediglich die Position und Verbindungen der Elemente des visuellen Netzwerkplans definiert, während ein Interpreter die Hard- und/oder Software-Ausstattung des Protokolltesters derart berücksichtigt, daß er die Elemente entsprechend kennzeichnet, für die eine Auswahl besteht und/oder die für die Konfiguration der Meßaufgabe verwendet werden können.

12. Verfahren nach einem der vorhergehenden Ansprüche,
**dadurch gekennzeichnet,**
**daß** die Modifikation darin besteht, daß nur ein Teil des visuellen Basisnetzplans auf der Anzeigevorrichtung angezeigt wird.

13. Verfahren nach einem der vorhergehenden Ansprüche,
**dadurch gekennzeichnet,**
**daß** die Modifikation darin besteht, daß die Elemente in einer vorgebbaren Weise **gekennzeichnet** sind, die im Hinblick auf die vorhandene Hard- und/oder Software konfiguriert werden können.

14. Verfahren nach Anspruch 13,
**dadurch gekennzeichnet,**
**daß** die Kennzeichnung darin besteht, daß für diese Elemente grafische Auswahlmöglichkeiten angeboten werden, aus denen der Benutzer auswählen kann.

15. Verfahren nach Anspruch 13 oder 14,
**dadurch gekennzeichnet,**
**daß** die Kennzeichnung darin besteht, daß Elemente, die konfiguriert werden können, und/oder Elemente, für die eine Konfigurationsmöglichkeit erwerbbar ist, und/oder Elemente, für die keine Konfigurationsmöglichkeit erhältlich ist, visuell unterschiedlich dargestellt werden, insbesondere unter Verwendung unterschiedlicher Farben.

16. Verfahren nach Anspruch 15,
**dadurch gekennzeichnet,**
**daß** nur die Elemente von einem Benutzer konfiguriert werden können, für die die entsprechende Hard- und/oder Software in dem Protokolltester vorhanden ist.

17. Protokolltester zur Durchführung eines Verfahrens nach einem der Ansprüche 1 bis 16.
